# EUROPEAN PATENT APPLICATION

(11) **EP 4 474 225 A1**
(43) Date of publication of application: **11.12.2024**
(21) Application number: 22924140.1
(22) Date of filing: 15.12.2022
(51) Int. Cl.: B60R 21/203, B60R 21/231, B60R 21/2338

(54) **DRIVER SEAT AIRBAG DEVICE**

(30) Priority: 31.01.2022 JP 2022013365
(71) Applicant: Autoliv Development AB, 44783 Vargarda (SE)
(72) Inventor: KOIZUMI, Akira, Yokohama-shi, Kanagawa 222-8580 (JP); ABE, Kazuhiro, Yokohama-shi, Kanagawa 222-8580 (JP); ISHIGAKI, Ryota, Yokohama-shi, Kanagawa 222-8580 (JP); MIYAGI, Keitoku, Yokohama-shi, Kanagawa 222-8580 (JP)
(74) Representative: Schön, Thilo
(86) International application number: PCT/JP2022/046198
(87) International publication number: WO 2023/145289

(57) **Abstract**

[Problem]

To provide a driver seat airbag device with a simple configuration and that enables suppressing injury value of the driver.

RESOLUTION MEANS

An airbag cushion 108 of the airbag device 100 for a vehicle includes a rear panel 122 positioned on the steering wheel 106 side, a front panel 120 positioned on the driver 104 side for restraining the driver 166, and a side panel 124 that connects an edge of the rear panel 122 and an edge of the front panel 120 and constitutes a side part of the airbag cushion 108. The front panel 120 is a combination of sub-panels 120a to 120d that gradually narrow from the outer edge of the front panel 120 toward the center thereof. The airbag cushion 108 further includes an internal tether 144 inside the airbag cushion 108 that pulls the center region of the front panel 120 toward the rear panel 122.

## Description

### TECHNICAL FIELD

The present invention relates to a driver seat airbag device installed in a vehicle steering wheel.

### BACKGROUND ART

Currently, nearly all vehicle steering wheels are equipped with a driver seat airbag device. The airbag cushion of the driver seat airbag device is primarily stored in the central hub of the steering wheel and cleaves a resin cover, and the like by the expansion pressure so as to expand and deploy toward the front of a passenger.

More efficient restraint of an occupant is desired for the airbag cushion described above. The inventors of the present application focused on the fact that, based on body structure, rotation of a head of the occupant tends to cause strain on the body, and have developed an airbag cushion that enables efficient restraint while suppressing rotation of the head of the occupant.

For example, it has been found that in the case of an oblique collision that is a collision at an angle relative to the direction of travel, the occupant enters the airbag cushion at an angle and the head easily rotates. In light of this, the applicant of the present application has developed a technique of forming a recess part 114 using an internal tether 116 at the center of an airbag cushion 104 on the occupant side as disclosed in FIG. 2 of Patent Document 1, for example.

### RELATED ART DOCUMENTS

### PATENT DOCUMENTS

Patent Document 1: Japanese Unexamined Patent Application Publication 2020-37382

### SUMMARY OF THE INVENTION

### PROBLEM TO BE SOLVED BY THE INVENTION

With the technique of Patent Document 1, a center base material 118 and three internal tethers 116 and the like components are used to form the recess part 114. Apart from this technology, a technology to form a concavity equivalent to the recess part 114 with an even more concise component configuration is currently under development.

In light of these problems, an object of the present invention is to provide a driver seat airbag device with a simple configuration that suppresses injury value of the driver.

### MEANS FOR SOLVING THE PROBLEM

In order to resolve the problem described above, a typical configuration of a driver seat airbag device according to the present invention, comprises: an inflator installed in a steering wheel of a vehicle; and an airbag cushion stowed together with the inflator in the steering wheel that receives gas from the inflator and expands and deploys toward the driver, wherein
the airbag cushion includes:
a rear panel positioned on the steering wheel side,
a front panel positioned on the driver side for restraining the driver, and
a side panel that connects the edge of the rear panel and the edge of the front panel and constitutes a side part of the airbag cushion,
the front panel is a combination of a plurality of sub-panels that gradually narrow from the outer peripheral edge thereof towards the center, and
the airbag cushion further includes an internal tether that pulls near the center of the front panel toward the rear panel inside the airbag cushion.

With this configuration, the internal tether pulling on the front panel enables efficiently forming the recess part in the center region of the front panel. With this recess part, rotation of the head can be suppressed compared to restraining the driver with a simple flat surface when the driver moves forward at an angle in an oblique collision. Therefore, with the above-described configuration, it is possible to restrain the driver and suppress injury value.

In addition, with the configuration described above, the recess part can be formed with a simple configuration using the front panel composed of a plurality of sub-panels and the internal tether. Therefore, with the configuration described above, the amount of materials used for the panels and the like is low enabling weight reduction and increase in material yield, thereby achieving low cost and further the airbag cushion can also be folded and stowed in a more compact manner.

The recess part formed by pulling on and depressing the center region of the front panel with the internal tether may have an elongated shape at the bottom portion.

With the recess part having the configuration described above as well, rotation of the head can be suppressed while restraining when the driver moves forward at an angle such as in an oblique collision.

The main portions of the plurality of sub-panels are polygonal; each of the polygonal sub-panels has a long side, that is the longest side, which together form the periphery of the front panel, and a portion on another side other than the longest side that connects with the other sub-panels.

The recess part in the center of the front panel can also be efficiently formed by using a plurality of polygonal sub-panels.

The polygon described above may be a pentagon. The recess part in the center region of the front panel can be efficiently formed by using a plurality of pentagonal sub-panels.

The plurality of sub-panels may be fan shaped and the fan shaped sub-panels have an arc forming the periphery of the front panel, and two sides other than this arc may be connected to other sub-panels.

A conical depressed recess part can be efficiently formed by using the plurality of fan shaped panels described above.

The number of the plurality of sub-panels may be four. The recess part can be efficiently formed by forming the front panel combining the four sub-panels, and pulling the center where the apex of each sub-panel intersects using the internal tether.

A first end of the internal tether described above may be connected to the center of the front panel at the apex of two opposing sub-panels.

The structure described above also enables efficient forming of the recess part.

The internal tether described above may be integrally formed with the sub-panel.

The internal tether described above enables efficient pulling of the sub-panel toward the real panel.

### EFFECT OF THE INVENTION

With the present invention, a driver seat airbag device for the driver having a simple configuration and that suppresses injury value of the driver can be provided.

### BRIEF DESCRIPTION OF THE DRAWINGS

FIG. 1 is a diagram depicting the outline of a driver seat airbag device according to an embodiment of the present invention.
FIG. 2 is a perspective view of an airbag cushion when expanded and deployed in FIG. 1(b).
FIG. 3 is a diagram depicting each panel configuring an airbag cushion in FIG. 2(a).
FIG. 4 is a cross-sectional view of the airbag cushion in FIG. 1(b) along A-A.
FIG. 5 is a diagram depicting the process of the airbag cushion of FIG. 1(b) restraining the driver in an oblique collision.
FIG. 6 is a diagram depicting a modified example of the sub-panels depicted in FIG. 3.
FIG. 7 is a modified example of the rear panel and side panel depicted in FIG. 3.

### DESCRIPTION OF THE PREFERRED EMBODIMENTS

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

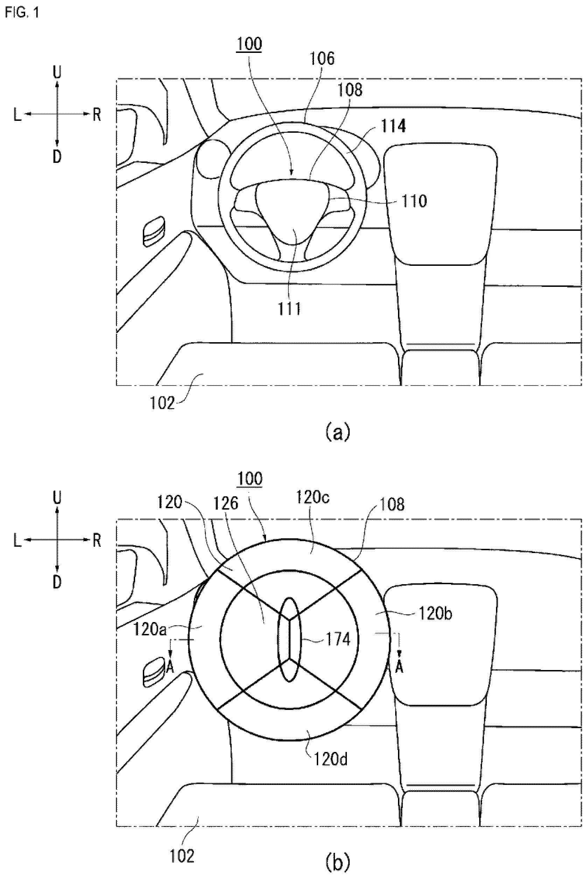

FIG. 1 is a diagram depicting an overview of a driver seat airbag device (hereinafter referred to as airbag device 100) according to an embodiment of the present invention. FIG. 1(a) is a diagram depicting a state of the airbag device 100 before activation. As depicted in FIG. 1(b), the vehicle airbag device 100 is implemented as a frontal airbag of a driver seat 102 on a front row left side in a left hand drive vehicle.

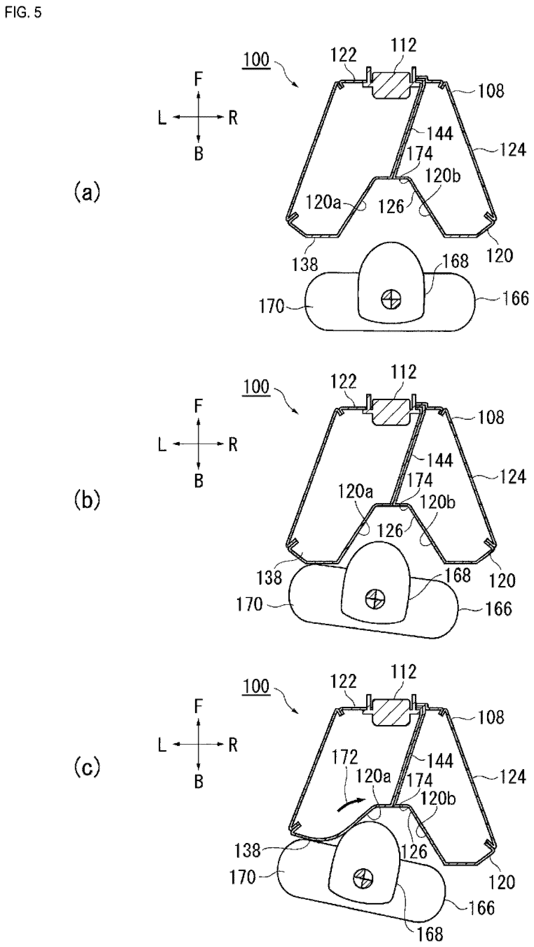

In the present embodiment, when a driver 166 (see FIG. 5(a)) is seated in a regular posture in the driver seat 102, the direction the driver 166 is facing is referred to as forward, the opposite direction is referred to as rearward, and the directions are referred to as the front-to-back direction when axes on coordinates are depicted. In addition, when the driver 166 is seated in the driver seat 102 in a regular posture, the right side of the driver 166 is referred to as the right direction, the left side of the driver 166 is referred to as the left direction, and the directions are referred to as the left-right direction when axes on coordinates are depicted. Furthermore, when the driver 166 is seated in a regular posture, the head direction of the driver 166 is referred to as up, the waist direction of the driver 166 is referred to as down, and the directions are referred to as the up-down direction when axes on coordinates are depicted.

In the drawings used in the description of embodiments of the present invention below, as necessary, the front, back, left, right, up, and down directions with reference to the driver 166 described above are indicated by arrows F (Forward), B (Back), L (Left), R (Right), U (up), and D (down).

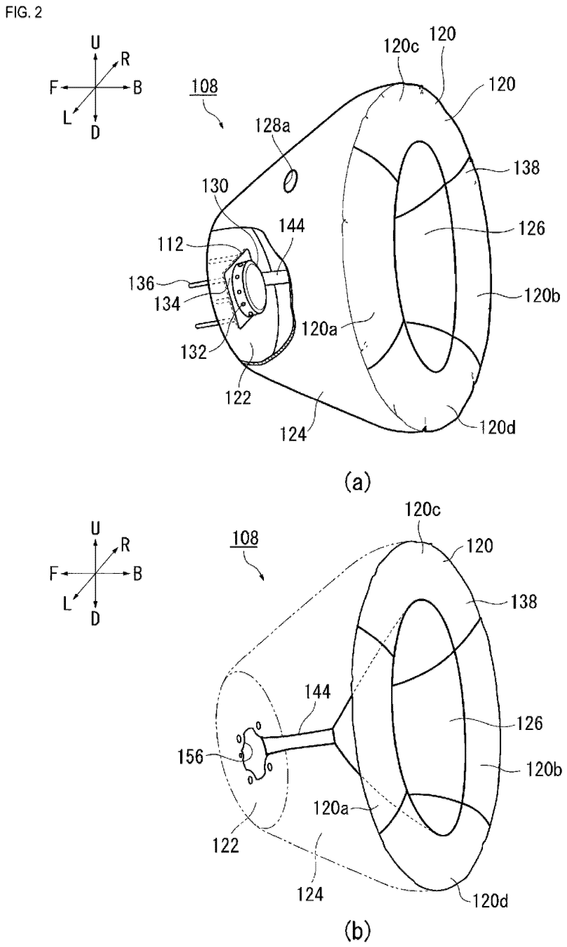

The airbag device 100 is installed in a steering wheel 106, and the driver 166 (see FIG. 5(a), and the like) seated in the driver seat 102 is restrained and protected by an airbag cushion 108 (see FIG. 1(b)) during emergencies, such as an impact to the vehicle, or the like. The airbag cushion 108 is a bag shaped member that can be expanded using gas, that is made compact for stowing by being rolled or folded, and is then stowed together with an inflator 112 (see FIG. 2(a)) in a stowing part 110 in the center of the steering wheel 106.

The stowing part 110 is provided more to the center than a rim 114 of the steering wheel 106 and the surface thereof is covered with a cover 111. The cover 111 is provided with grooved tear line on the inside that is designed to cleave in the event the airbag cushion 108 expands and deploys (see FIG. 1(b)).

FIG. 1(b) is a diagram depicting a state of the airbag device 100 after activation. A cushion 104 expands and deploys in a bag shape towards the driver 166 (see FIG. 5(a)) in the driver seat 102, cleaving the cover 111 (see FIG. 1(a)) using expansion pressure of gas from the inflator 112 (see FIG. 2(a)) and restrains the upper body and head of the driver 166 from moving forward.

The airbag cushion 108 is a round shape from the perspective of the driver seat and expands and deploys in a shape with a recess part 126 formed near the center. The airbag cushion 108 is formed by overlaying and sewing or adhering a plurality of base fabrics forming a surface thereof.

FIG. 2 is a perspective view of an airbag cushion 108 when expanded and deployed in FIG. 1(b). FIG. 2(a) is a diagram depicting the airbag cushion 108 of FIG. 1(b) viewed from slightly above the left side of the vehicle in the width direction. In FIG. 2(a), a portion of the panel configuring the airbag cushion 108 is cut out to expose the internal inflator 112.

The airbag cushion 108 of the present embodiment expands and deploys in a shape that conforms to a truncated cone. The airbag cushion 108 is formed from a plurality of panels and contains a front panel 120 positioned on the driver side, a rear panel 122 positioned on the steering wheel 106 side (see FIG. 1(a)), and a side panel 124 connecting the front panel 120 and the rear panel 122 to form a side portion of the airbag cushion 108. The front panel 120 has a recess part 126 formed near the center. The side panel 124 is also provided with a vent hole 128a for discharging gas.

The inflator 112 is a gas generating device secured to a bottom of the stowing part 110. Upon receiving a detection signal sent from a sensor (not depicted), the inflator 112 is activated, and thereby supplies gas to the airbag cushion 108. The inflator 112 is disc shaped and includes a main body part 130, a gas emitting hole 132 provided on the side surface of the main body part 130, and a flange 134 provided on the outer circumference of the main body part 130.

The inflator 112 is provided with a plurality of stud bolts 136. The stud bolts 136 pass through the rear panel 122 of the airbag cushion 108 and connect to a bottom part of the stowing part 110 of the steering wheel 106 (see FIG. 1(a)). The airbag cushion 108 is also secured inside the stowing part 110 by fastening of the stud bolts 136.

Note that examples of currently prevailing inflators include: types which are filled with a gas generating agent and burn the agent to generate gas; types which are filled with compressed gas and supply gas without generating heat; hybrid types which utilize both combustion gas and compressed gas; and the like. Any of these types can be used for the inflator 112.

FIG. 2(b) is a diagram depicting the recess part 126 through the side panel 124 and the like of FIG. 2(a). The airbag cushion 108 of the present embodiment has a concave shaped recess part 126 near the center of the front panel 120 on the driver side.

The front panel 120 is formed by assembling four sub-panels 120a to 120d. The recess part 126 is formed by an internal tether 144 pulling the front panel 120 toward the rear panel 122. This recess part 126 is used to suppress rotation of a head 168 of the driver 166 (see FIG. 5(a)) when restraining an occupant, as depicted in FIG. 5 below.

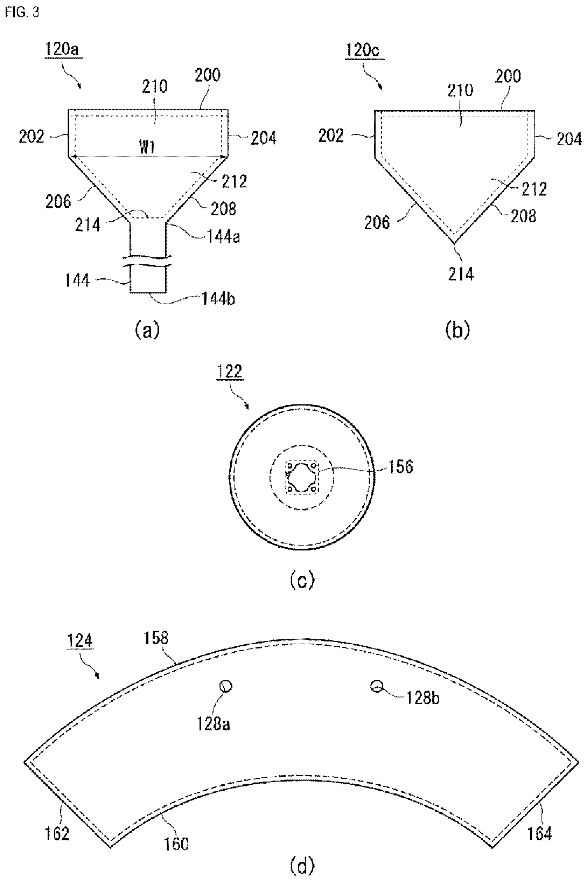

FIG. 3 is a diagram depicting each panel configuring an airbag cushion 108 in FIG. 2(a). In FIG. 3, each panel is depicted in a state spread out on a plane.

FIG. 3(c) is a diagram depicting the sub-panel 120a of FIG. 2(a). The sub-panels 120a and 120b are panels arranged in a position facing each other on the left and right of the front panel 120 and have the same configuration.

The airbag device 100 utilizes sub-panels with polygonal shapes for the main portion. For example, in the present embodiment, other than the internal tether 144, the main portion of the sub-panel 120a is pentagonal. For the sub-panel 120a, the longest of the five sides (long side 200) forms a periphery of the front panel 120. Furthermore, sides 202 and 204 extend perpendicular to the long side 200, and oblique sides 206 and 208 extend obliquely therefrom. These four sides composed of sides 202 and 204 and oblique sides 206 and 208, other than long side 200, are used as portions to connect with other sub-panels 120c and 120d (see FIG. 2(c)).

The sub-panel 120a can be broadly divided into rectangular region 210 and a triangular region 212. The rectangular region 210 is a region surrounded by the long side 200 and the sides 202 and 204. Here, a boundary W1 between the sides 202 and 204 and the oblique sides 206 and 208 is formed with the same width dimension as the long side 200. When the other sub-panels 120b to 120d are combined to form the front panel 120 (see FIG. 2(c)), the rectangular region 210 forms a peripheral portion 138 of the front panel 120. The triangular region 212 forms the inner wall of the recess part 126.

The sub-panel 120a has an integral internal tether 144. The internal tether 144 is a strip of material that pulls the front panel 120 toward the rear panel 122 inside the airbag cushion 108. Internal tethers 144 are provided on each of the sub-panels 120a and 120b that face each other that mutually overlap and are joined together.

A first end 144a of the internal tether 144 is connected to an apex 214 positioned in the center of the front panel 120 within the triangular region 212, and a second end 144b is connected to the periphery of a securing region 156 (see FIG. 3(c)) of the rear panel 122. With this configuration, the internal tether 144 pulls the center of the front panel toward the rear panel 122 enabling efficient forming of the concave recess part 126.

In other aspects, the second end 144b of the internal tether 144 can be suitably connected to a portion on the vehicle side of the airbag cushion 108 such as the inflator 112, a retainer (not depicted) used when securing the inflator 112, or to the bottom of the stowing part 110 (see FIG. 1(a)).

FIG. 3(b) is a diagram depicting the sub-panel 120b of FIG. 2(a). The sub-panels 120b are panels arranged in a position facing each other on the left and right of the front panel 120 and have the same configuration.

The sub-panel 120b has the same configuration as the sub-panel 120a except for not including the internal tether 144 (see FIG. 3(a)). For example, for the sub-panel 120b as well, the long side 200 forms a periphery of the front panel 120 (see FIG. 2(b)) and the sides composed of the sides 202 and 204 and oblique sides 206 and 208 are connected to the other sub-panels 120a and 120b. The sub-panel 120a also has a rectangular region 210 that forms the peripheral portion 138 of the front panel 120 and a triangular region 212 that forms the inner wall of the recess part 126.

As indicated, the front panel 120 of FIG. 2(b) is a combination of pentagonal sub-panels 120a to 120d that gradually narrow from the periphery to the center of the front panel 120. In particular, the four pentagonal sub-panels 120a to 120d are combined and the center where the apex 214 of each sub-panel intersects (see FIG. 3(a)) is pulled using the internal tether 144 so the concave shaped recess part 126 can be efficiently formed near the center of the front panel 120.

Note that with other aspects, a polygon configured with more sides than a pentagon may be used for the sub-panel. For example, the rectangular region 210 of FIG. 3(a) may be hexagonal and combining with the triangular region 212, the sub-panel overall may be heptagonal. With this configuration, for example, the dimension of the long side 200 can be set longer than boundary W1 enabling achieving a sub-panel with a shape that gradually widens from the apex 214 to the boundary W1 and further to the long side 200.

FIG. 3(c) is a diagram depicting the rear panel 122 of FIG. 2(a). The rear panel 122 is circular and forms a reaction surface that captures reaction forces from the steering wheel 106 (see FIG. 1(a)) when the airbag cushion 108 is expanded and deployed. The airbag cushion 108 expands and deploys in a shape of a truncated cone spreading toward the driver side, and therefore, the rear panel 122 has a narrower diameter than the front panel 120 (see FIG. 2(a)).

The inflator 112 (see FIG. 2(a)) is inserted in the center of the rear panel 122 and the securing region 156 is formed as a region for securing the stowing part 110.

FIG. 3(d) is a diagram depicting the side panel 124 in FIG. 2(a). The side panel 124 has an annular fan shaped configuration. The side panel 124 is also provided with two vent holes 128a and 128b.

Of two arcs 158 and 160 of the side panel 124, the large diameter side arc 158 is sewn to the long side 200 of the sub-panel 120a (see FIG. 3(a)) serving as an edge of the front panel 120 and the small diameter arc 160 is sewn to an edge of the rear panel 122 (see FIG. 3(c)). Both ends 162 and 164 of the side panel 124 are sewn together. The annular fan shaped side panel 124 connects the edge of the rear panel 122 and the edge of the front panel 120 and forms a side part of the airbag cushion 108, suppressing unnecessary swelling and enabling implementation of an airbag cushion 108 with a shape that gradually broadens in diameter towards the driver 166 (see FIG. 5(a)).

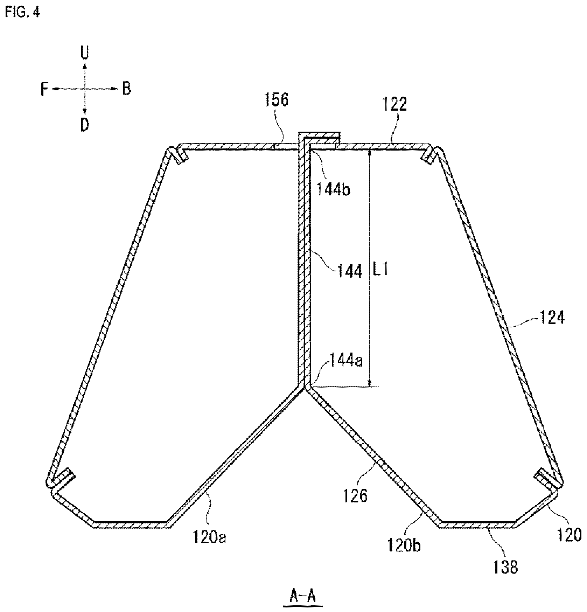

FIG. 4 is a cross-sectional view of the airbag cushion 108 in FIG. 1(b) along A-A. A dimension L1 from the first end 144a of the internal tether 144 to the second end 144b is formed with a dimension to generate tension between the sub-panel 120a and the rear panel 122 during expansion and deployment of the airbag cushion 108 and pull the sub-panel 120a toward the rear panel 122. With this configuration, pulling the internal tether 144 toward the rear panel 122 enables forming the concave recess part 126.

The internal tether 144 is not limited to a configuration of being integrally formed with the sub-panel 120a and may be formed as a separate member and then connected to the sub-panel 120a and either configuration enables pulling the sub-panel 120a toward the rear panel 122.

FIG. 5 is a diagram depicting the process of the airbag cushion 108 of FIG. 1(b) restraining the driver 166 in an oblique collision. Each of the diagrams in FIG. 5 are schematic cross-sectional views corresponding to the A-A cross-sectional view of the airbag cushion 108 in FIG. 4(b), depicting the airbag cushion 108 and the driver 166 from above the vehicle.

FIG. 5(a) is a diagram depicting the appearance of the airbag cushion 108 immediately after expansion and deployment. As depicted in FIG. 5(a), when the vehicle is in an oblique collision, the airbag cushion 108 expands and deploys to the front of the driver seat 102 in the vehicle (see FIG. 1(b)).

FIG. 5(b) depicts a state of the driver 166 of FIG. 5(a) moving towards the front of the vehicle. There are cases where the driver 166 moves diagonally to the left in the vehicle width direction from the state of FIG. 5(a) due to inertia during an oblique collision.

FIG. 5(c) depicts a state of the driver 166 of FIG. 5(b) moving further towards the front of the vehicle. The left shoulder of the driver 166 that moved diagonally forward may come into contact with the peripheral portion of a front panel 138 and the head 168 may come into contact with the sub-panel 120a of the recess part 126.

The front panel 120 that forms a recess part 126 is able to restrain the head 168 from an oblique frontal angle by means of the recess part 126 while suppressing the tension force on the peripheral portion 138, as compared to conventional front panel 120 spread in a single flat shape. Therefore, the airbag cushion 108 minimizes rotation 172 of the head 168 with respect to a shoulder 170 of the driver 166, and coinciding with movement of the shoulder 170, can restrain movement of the head 168.

In this manner, the airbag cushion 108 is able to greatly reduce or eliminate rotation 172 of the head 168 of the driver 166 in an oblique collision in addition to occupant restraint in a normal collision and by reducing angular velocity of the head 168, is able to suppress injury value of the driver 166 associated with rotation 172 of the head 168.

As described above, with the present embodiment, the internal tether 144 pulls the front panel 120, enabling efficient forming of a concave shaped recess part 126 near the center of the front panel 120. With this recess part 126, rotation 172 of the head 168 can be suppressed compared to restraining the driver 104 with a simple flat surface when the driver 104 moves forward at an angle in an oblique collision. Therefore, with the above-described configuration, it is possible to restrain the driver 104 and suppress injury value.

In addition, with the present embodiment, the recess part 126 is formed with a simple structure utilizing the front panel 120 composed of the plurality of sub-panels 120a to 120d and the internal tether 144. Therefore, with the present embodiment, the amount of materials used for the panels and the like is low enabling weight reduction and increase in material yield, thereby achieving low cost, and further the airbag cushion 108 can also be folded and stowed in a more compact manner.

In addition, as depicted in FIG. 3(a), the internal tether 144 is configured in a strip shape with a prescribed width. Therefore, when the internal tether 144 of the left and right sub-panels 120a and 120b in FIG. 1(b) are pulled to the rear panel 122 side, the bottom portion 174 of the recess part 126 is formed in an elongated oval shape in the width direction of the internal tether 144, in other words, the vertical direction. A human head is an elongated shape, and the position of the head varies vertically from person to person, so the recess part 126 having an elongated bottom portion 174 is more suitably able to restrain the head 168 of the driver 166 (see FIG. 5(c)).

Note that with the description with reference to FIG. 5(c) described above, clockwise rotation was used as an example of rotation 172 that occurs with the head 168. However, depending on the conditions of the emergency, the driver 166 may move obliquely to the right in the vehicle width direction and the head 168 may rotate counterclockwise centered on the neck as viewed from above. The airbag cushion 108 of the present embodiment is able to reduce or eliminate rotation of the head 168 using the recess part 126 for this counterclockwise rotation as well and is able to reduce angular velocity of the head 168. In this manner, the airbag cushion 108 of the present embodiment is able to achieve the same effect regardless of which direction in the vehicle width direction the driver 166 moves towards.

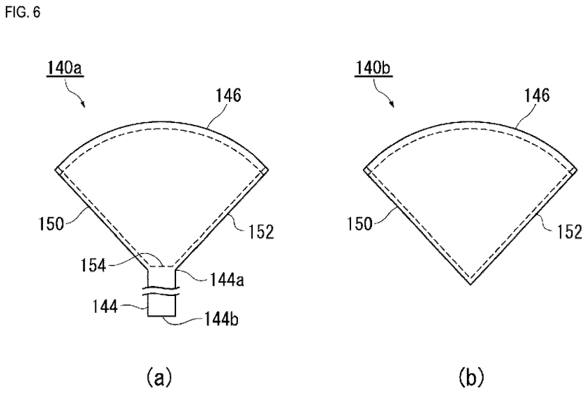

FIG. 6 is a modified example of the sub-panels 120a and 120c depicted in FIG. 3. FIG. 6(a) depicts a modified example (sub-panel 140a) of the sub-panel 120a of FIG. 3(a). The sub-panel 140a can be formed in, for example, a fan shape.

The fan shaped sub-panel 140a includes an arc 146 that forms the periphery of the front panel 120 and in addition to the arc 146, two sides 150 and 152 that connect to other sub-panels. The dimensions of the fan can be set so that the length of arc S1, which is concentric with arc 146 and passes through the center of sides 150 and 152, is about 2/3 the length of arc 146, for example.

The sub-panel 140a is formed with an integral internal tether 144. The first end 144a of the internal tether 144 is connected to a center angle 154 of the sub-panel 140a and the second end 144b is connected to the periphery of the securing region 156 (see FIG. 3(c)) of the rear panel 122. With this configuration, the internal tether 144 pulls the center angle 154 portion of the sub-panel 140a toward the rear panel 122, enabling efficient forming of the cone shaped recess part 126.

FIG. 6(b) depicts a modified example (sub-panel 140b) of the sub-panel 120c of FIG. 3(b). The sub-panels 140b are panels arranged in a position facing each other on the left and right of the front panel 120 (see FIG. 2(b)) and have the same configuration. The sub-panel 140b has the same configuration as the sub-panel 140a except for not including the internal tether 144 (see FIG. 6(b)).

As indicated, the front panel 120 of FIG. 2(b) can be formed as a combination or the like of fan shaped sub-panels 140a and 140b that gradually narrow from the periphery to the center of the front panel 120. The four fan shaped sub-panels 140a and the like are combined and the center angle 154

(see FIG. 6(a)) is pulled using the internal tether 144 so the cone shaped recess part 126 can be efficiently formed near the center of the front panel 120.

Note that in each of the embodiments described above, the front panel 120 is formed using four sub-panels (see FIG. 2(b)), but the number of sub-panels is not limited to this. For example, other aspects of front panels that can form a recess part 126 near the center can be suitably achieved by combining three sub-panels or five or more sub-panels.

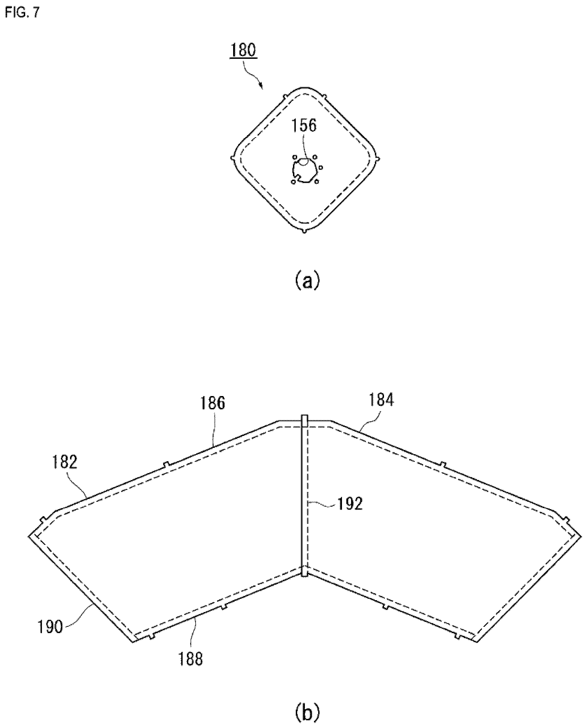

FIG. 7 is a modified example of the rear panel 122 and the side panel 124 depicted in FIG. 3. FIG. 7(a) is a diagram depicting a rear panel 180 of the modified example. The rear panel 180 is formed in a rectangular shape. The rear panel 180 of this configuration is also able to function as a reaction surface, that is able to receive a reaction force from the steering wheel 106 (see FIG. 1(a)) during an emergency of the airbag cushion 108 (see FIG. 1(b)).

FIG. 7(b) is a diagram depicting modified side panels (side panels 182 and 184). The side panels 182 and 184 are trapezoidal in shape and are mutually joined together to form the side surface of the airbag cushion.

The sub-panel 182 can be sewn to the peripheral portion of the front panel 138 (see Figure 3(a)) at a long side 186 corresponding to the lower edge of the trapezoid, for example, and to the edge of the rear panel 180 (see FIG. 7(a)) at a short side 188 corresponding to the upper edge. Furthermore, connecting the sides 190 and 192 with the side panels 184 enables suitably forming the side part of the airbag cushion 108.

Preferred embodiments of the present invention were described with reference to the appended drawings, but it goes without saying that the present invention is not limited to such examples. It is clear that a person of ordinary skill in the art could conceive of various modifications or revisions within the scope set forth by the claims, and it would be understood that these modifications or revisions would belong to the technical scope of the present invention.

Moreover, the example in which the airbag device according to the present invention is applied to an automobile has been described in the embodiments described above. However, in addition to automobiles, the present invention can be applied to aircrafts, ships, and the like, with the same operation and effects capable of being achieved.

### INDUSTRIAL APPLICABILITY

The present invention can be used in a driver seat airbag device installed in a vehicle steering wheel.

### EXPLANATION OF CODES

100. Airbag device, 102. Driver seat, 104. Cushion, 106. Steering wheel, 108. Airbag cushion, 110. Stowing part, 111. Cover, 112. Inflator, 114. Rim, 120. Front panel, 120a to 120d. Sub-panel, 122. Rear panel, 124. Side panel, 126. Recess part, 128a, 128b. Vent hole, 130. Main body part, 132. Gas emitting hole, 134. Flange, 136. Stud bolt, 138. Peripheral portion, 140a, 140b. Sub-panel, 144. Internal tether, 144a. First end, 144b. Second end, 146. Arc, 150, 152. Side, 154. Center angle, 156. Securing region, 158. Arc, 160. Arc, 162, 164. Both ends, 166. Driver, 168. Head, 170. Shoulder, 172. Rotation, 174. Bottom portion, 180. Rear panel, 182, 184. Side panel, 186. Long side, 188. Short side, 190, 192. Side, 200. Long side, 202, 204. Side, 206, 208. Oblique side, 210. Rectangular region, 212. Triangular region, 214. Apex, L1. Dimension, S1. Arc, W1. Boundary.

## Claims

1. A driver seat airbag device, comprising:
an inflator installed in a steering wheel of a vehicle; and
an airbag cushion stowed together with the inflator in the steering wheel that receives gas from the inflator and expands and deploys toward the driver, wherein
the airbag cushion includes:
a rear panel positioned on the steering wheel side,
a front panel positioned on the driver side for restraining the driver, and
a side panel that connects the edge of the rear panel and the edge of the front panel and constitutes a side part of the airbag cushion,
the front panel is a combination of a plurality of sub-panels that gradually narrow from the outer peripheral edge thereof towards the center, and
the airbag cushion further includes an internal tether that pulls near the center of the front panel toward the rear panel inside the airbag cushion.

2. The driver seat airbag device according to claim 1, wherein a recess part formed by the internal tether pulling on near the center of the front panel has a longitudinal shape at the bottom portion.

3. The driver seat airbag device according to claim 1, wherein the main portions of the plurality of sub-panels are polygonal and these polygonal sub-panels have: a long side, that is a longest side, that form the periphery of the front panel; and a portion on another side other than the longest side, that connects with other sub-panels.

4. The driver seat airbag device according to claim 3 where the polygon is a pentagon.

5. The driver seat airbag device according to claim 1, wherein the plurality of sub-panels are fan shaped and the fan shaped sub-panels have an arc forming the periphery of the front panel and two sides other than this arc are connected to other sub-panels.

6. The driver seat airbag device according to claim 4 or 5, wherein there are four sub-panels provided.

7. The driver seat airbag device according to claim 6, wherein, of the four sub-panels, a first end of the internal tether is connected to the apex of two opposing sub-panels at the center of the front panel.

8. The driver seat airbag device according to anyone of claim 1 to 7, wherein the internal tether is integrally formed with the sub-panel.
